# EUROPEAN PATENT APPLICATION

(11) **EP 1 239 059 A2**
(43) Date of publication of application: **11.09.2002**
(21) Application number: 02251393.1
(22) Date of filing: 27.02.2002
(51) Int. Cl.: C23F 1/04

(54) **Chemical milling of the blades of a gas turbine engine**

(30) Priority: 07.03.2001 US 801117
(71) Applicant: GENERAL ELECTRIC COMPANY, Schenectady, NY 12345 (US)
(72) Inventor: Davis, Brian Michael, West Chester, Ohio 45069 (US); Stamm, Edward Ivan, Cincinnatti, Ohio 45227 (US); Ballman, Steven Mark, West Chester, Ohio 45069 (US); Young, Kurt Edward, Cincinnati, Ohio 45209 (US); Gutknecht, James Edward, Cincinnati,Ohio 45240 (US)
(74) Representative: Szary, Anne Catherine, Dr.

(57) **Abstract**

A method for chemical milling of a gas turbine engine blisk (10) having a hub (14) and a plurality of blades (18) made of metal for the purpose of changing the dimensional characteristics (i.e., chord (46) and/or thickness (50)) of one or more of these blades (18). At least one blade (18) of the blisk (10) is treated with a chemical etchant of the metal that the blade (18) is made of for a period of time sufficient to change at least one of the chord (46) and thickness (50) of the blade(s) (18). In a preferred aspect of this method, at least one of the blades (18) of a rotationally imbalanced blisk (10) is treated with the chemical etchant for a period of time sufficient to change the chord (46) and/or thickness (50) of these blades (18) so that the blisk (10) is rotationally balanced.

## Description

The present invention relates generally to a method for chemical milling of the blades of a gas turbine engine bladed disk (blisk) to change the chord, thickness, or both of at least one of the blades. The present invention particularly relates to a method for selective chemical milling of the blades for the purpose of rotationally balancing the blisk or otherwise changing the dimensional characteristics of the blade(s) of the blisk.

A gas turbine engine fan or compressor is typically formed with one or more stages including a disk or hub from which extends radially outwardly a plurality of circumferentially spaced rotor blades. Each rotor blade typically includes an airfoil and a dovetail at its root, with the dovetail being radially retained in a complementary slot in the perimeter of the hub. During operation, the hub and blades attached thereto rotate, with the blades developing substantial centrifugal force which is carried downwardly through the respective dovetails and into the hub. The dovetails must be suitably configured and sized for supporting the blades with a suitably low level of stress for obtaining a useful life in operation.

In some gas turbine engine designs, the radius ratio and blade solidity are such that the blades are disposed relatively close together around the perimeter of the hub of the disk, with the hub being relatively small in diameter compared to the outer diameter of the disk defined by the tips of the blades. This results in the inability of conventional dovetail designs to carry centrifugal loading at suitable levels of stress for a useful service life. Accordingly, the blades can be manufactured integrally with the hub of the disk in a one piece component conventionally known as a bladed disk or "blisk." A gas turbine engine blisk is typically manufactured from a one piece solid forging which is conventionally machined using either mechanical machining (mechanical milling) or electrochemical machining (ECM). See U.S. Patent 4,772,372 (Bruns et al), issued September 20, 1998 and U.S. Patent 4,851,090 (Bruns et al), issued July 25, 1989, which disclose ECM methods and apparatus for making gas turbine engine blisks. With the blades being integral with the disk, satisfactory levels of stress can be obtained in the blisk during operation for obtaining a useful life.

Unfortunately, due to manufacturing tolerances and the inherent variation within the manufacturing processes for gas turbine engine blisks, all blades of the blisk are typically not formed to have the same width or chord (i.e., as defined by the line extending from the leading to the trailing edge of the blade) and/or the same thickness (i.e., as defined by the dimension between the convex curved surface or "suction" side of the blade and the concave curved surface or "pressure" side of the blade). The resulting variations in the chord and thickness of the blades can produce rotational imbalances in the blisk, as well as other differences in the dimensional characteristics of the blades that do not correspond to previously defined specifications for the blisk. If this rotational imbalance is sufficiently great in the blisk, it can produce excessive rotor vibration during operation, making the blisk unserviceable. Blisk rotational imbalance can also occur due to normal wear over time or damage of the blades in operation, or due to changes caused by repairs of the blisk in the field.

In the past, this rotational imbalance problem in gas turbine engine blisks has been addressed by one of two methods. One prior method is the addition of flange balance weights to adjust the rotational balance of the blisk. The disadvantage of flange balance weights is that they add mass to the blisk, and can thus potentially increase overall system stresses. Another prior method is to mechanically polish or machine the blisk to remove metal from the blades, flanges and/or platform region between the blade roots to adjust the rotational balance of the blisk, e.g., by offset/eccentric grinding of the blisk. The disadvantages of mechanical machining methods include the risk of damaging the blades or other portions of the blisk, the difficulty in finely controlling the changes in the chord and/or thickness of the blades, and the possibility of producing undesired residual stresses in the surface(s) of the blade(s).

Accordingly, it would be desirable to provide a method for correcting the rotational imbalances or other differences in dimensional characteristics of these blades that are created during the manufacture, operation or repair of gas turbine engine blisks that does not require added mass such as flange balance weights, can be achieved without mechanical machining of the blades, and can be more finely tuned than current methods for rotationally balancing or otherwise correcting the dimensional characteristics of these blades.

The present invention relates to a method for chemical milling of a gas turbine engine blisk having a hub and a plurality of blades made of metal spaced circumferentially around the hub and extending radially outwardly therefrom for the purpose of changing the dimensional characteristics of one or more of these blades. Each of the blades of the blisk has a leading edge, a trailing edge, a chord defined by a line extending from the leading to the trailing edge, a convex curved surface, a concave curved surface and a thickness defined between the convex and concave surfaces. This method comprises the step of treating at least one blade of the blisk with a chemical etchant of the metal that the blade is made of for a period of time sufficient to change at least one of the chord and thickness of the blade(s). In a preferred aspect of the method of the present invention, at least one of the blades of a rotationally imbalanced blisk is selectively treated with the chemical etchant for a period of time sufficient to change the chord and/or thickness of these blades so that the blisk is rotationally balanced.

The method of the present invention provides a number of significant benefits over prior methods for rotationally balancing manufactured, repaired or damaged gas turbine engine blisks. Chemical milling of the blades of the blisk can be more carefully controlled to adjust the chord and/or thickness of the blades to achieve blisk rotational balance, or to otherwise change the dimensional characteristics of one or more of the blades. Unlike flange weights or mechanical machining, the method of the present invention does not add mass and especially does not add further system stresses to the blisk. The method of the present invention also enables the blisks to be rotationally balanced following blade repairs to the blisk such as blending damage that can affect blisk balance.

A particular benefit of the method of the present invention is the ability to select those blades of the blisk that have the greatest mass (i.e., are the heaviest) and are most likely to cause rotational imbalance. By reducing the blade mass or weight, the root cause of blisk rotational imbalance is addressed, as well as providing a lighter blisk. In addition, by reducing blade weight, residual stresses caused by uneven or non-uniform distribution of blade weight throughout the blisk are alleviated, thus reducing local residual stresses in the blisk. This should be contrasted with prior methods of adding flange weights or offset/eccentric grinding to counteract the rotational imbalance. Adding flange weights or offset/eccentric grinding does not address the root cause(s) of the rotational imbalance and also can undesirably increase local residual stresses in the blisk.

FIG. 1 is a representative gas turbine engine blisk for which the method of the present invention is useful.

FIG. 2 is a sectional view of the airfoil portion of a blade from the blisk of FIG. 1.

FIG. 3 illustrates an embodiment of the method of the present invention.

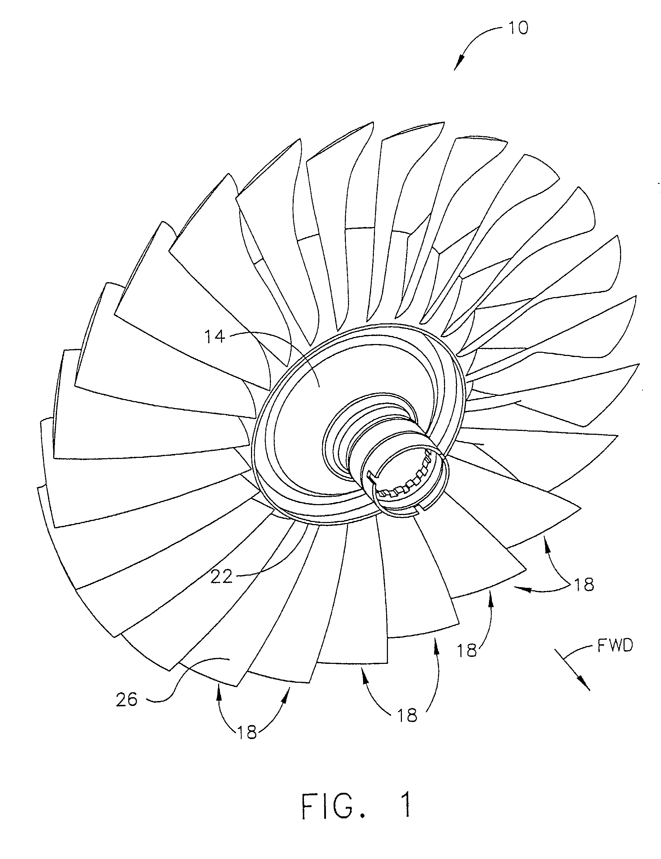

A representative gas turbine engine blisk for which the method of the present invention can be useful is shown in FIG. 1 and is indicated generally as 10. Blisk 10 includes a hub 14 and a plurality of blades 18 that are spaced circumferentially around the perimeter of hub 14. Each of blades 18 are integrally attached to hub 14 by a blade root indicated as 22. The airfoil portion of each blade is indicated as 26 and extends radially outwardly from hub 14 and blade root 22.

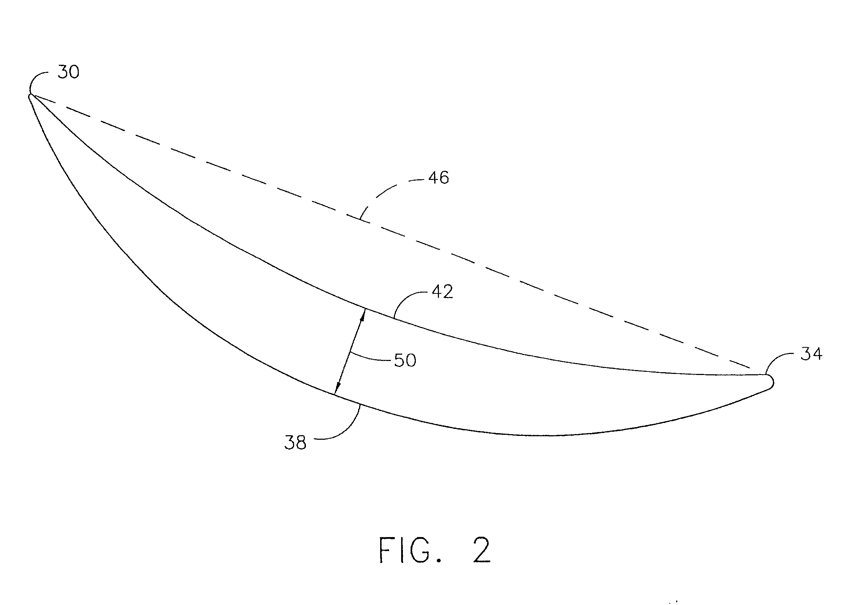

FIG. 2 shows a sectional view of the airfoil portion 26 of one of the blades 18 from blisk 10 of FIG. 1. As shown in FIG. 2, the airfoil portion 26 of blade 18 has a leading edge indicated as 30, a trailing edge indicated as 34, a convex curved surface (also referred to as the "suction" side of the blade) indicated as 38 that extends between leading and trailing edges 30 and 34 and a concave curved surface (also referred to as the "pressure" side of the blade) indicated as 42 that also extends between leading and trailing edges 30 and 34. The dashed line indicated by 46 that extends from the leading edge 30 to the trailing edge 34 defines the width or chord of the airfoil portion 26 of blade 18. The double headed arrow indicated by 50 between convex surface 38 and concave surface 42 defines the thickness (usually measured as the "maximum" thickness) of the airfoil portion 26 of blade 18.

The method of the present invention is used to change the dimensional characteristics of the airfoil portion 26 of one or more of the blades 18 of blisk 10. In particular, the method of the present invention is especially useful in rotationally balancing blisks 10 that have rotational imbalance problems due to variations or differences in the chord 46, the thickness 50, or both of the airfoil portion 26 of one or more of blades 18 of the blisk (relative to other blades 18 of blisk). These variations/differences in chord 46 and/or thickness 50 can be the result of imperfections in the original manufacture of the blisk 10, normal wear or damage to the blades 18 during use of the blisk in its operating environment, or changes to the blades 18 caused by repairs of blisk 10 (e.g., field repairs). These variations/differences can be corrected or changed in the method of the present invention by changing (decreasing) the chord 46, the thickness 50 (or both) of one or more of the blades 18 so that the blisk 10 is rotationally balanced. The method of the present invention can also be used to change the chord 46, the thickness 50 (or both) of one or more of the blades 18 to alter the dimensional characteristics of one or more of the blades 18 for purposes other than rotationally balancing the blisk. For example, the dimensional characteristics of the blade(s) 18 can be changed or altered so that blisk 10 conforms to previously defined specifications for the blisk.

The method of the present invention comprises the step of treating, (preferably by selectively contacting) one or more of the blades 18 of blisk 10 to be treated with a chemical etchant for the metal that the blade 18 is made of. Chemical milling (also referred to interchangeably as "chem milling") with chemical etchants provides the ability to fine tune metal removal from blades 18 so as to carefully control changes in the chord 46, the thickness 50 (or both) of the blades. Chemical milling with chemical etchants has previously been used to remove material uniformly from the surfaces of unattached individual airfoils or blades, especially the thin oxidized layer or "alpha case" that can occur during forging of airfoils or blades made from titanium metal. See U.S. Patent 4,563,239 (Adinolfi et al), issued January 7, 1986, which discloses a method for chemical milling unattached individual airfoils or blades using a moving vessel such as a rotating barrel. However, chemical milling with chemical etchants has not been previously disclosed for use in rotationally balancing gas turbine engine blisks (i.e., where the blades and the hub of the disk are integral), or otherwise changing or altering the dimensional characteristics of the blades of the blisk for purposes other than rotational balancing.

The chemical etchants used in the method of the present invention will usually depend upon the metal (or metal alloy) that the blades of the blisk are made of, such as, for example titanium, steel, nickel, tungsten and alloys thereof. Typically, the chemical etchants used are aqueous etchant solutions comprising at least one strong acid such as hydrofluoric acid, nitric acid, hydrochloric acid, sulfuric acid, and mixtures thereof. For example, chemical etchants suitable for use with blades made of titanium include aqueous solutions comprising hydrofluoric acid, or mixtures of hydrofluoric acid and nitric acid, such as, for example (by volume), from about 8 to about 16% concentrated nitric acid and from about 3 to about 10% concentrated hydrofluoric acid, including adding a commercial wetting agent as needed, such as Orvus WA (Procter & Gamble Co., Cincinnati, Ohio USA). See, for example, U.S. Patent 4,563,239 (Adinolfi et al), issued January 7, 1986 (especially col. 2, line 67 to col. 3, line 7), which is incorporated by reference. Chemical etchants suitable for use with blades made of high tungsten content alloys include aqueous solutions comprising mixtures of hydrofluoric acid and nitric acid, such as, for example (by volume), from about 40 to about 60% concentrated nitric acid, from about 0.6 to about 0.8% concentrated hydrofluoric acid, and from about 30 to about 70% water, which also includes at least about 0.008 moles/l. of cupric sulfate and from about 0.0016 to about 0.025 moles/l. of ferric chloride. See, for example, U.S. Patent 4,353,780 (Fishter et al), issued October 12, 1982 (especially col. 1, lines 50-58), which is incorporated by reference. Chemical etchants suitable for use with blades made of nickel based alloys include aqueous solutions comprising mixtures of nitric acid and hydrochloric acid, such as, for example (by volume), from about 40 to about 60% concentrated nitric acid, from about 5 to about 20% hydrochloric acid, the balance of the solution being water, including from about 0.008 to about 0.025 mole/l. of ferric chloride and at least about 0.016 mole/l. of cupric sulfate. See, for example, U.S. Patent 4,411,730 (Fishter et al), issued October 25, 1983 (especially col. 2, lines 40-51), which is incorporated by reference. Chemical etchants suitable for use with blades made of IN-100 nickel based alloys include aqueous solutions comprising mixtures of hydrochloric acid and nitric acid such as, for example (by volume), from about 32.5 to about 85% hydrochloric acid (preferably from about 32.5 to about 42.5%), with other included ingredients proportioned relative to the volume of hydrochloric acid, namely, from about 35 to about 45 ml/l. of nitric acid, from about 0.0122 to about 0.0160 moles/l. of metal sulfate ion, from about 0.0283 to about 0.0369 moles/l. of metal chloride ion, from about 0.0146 to about 0.0190 moles/l. of metal fluoride ion and from about 0.0063 to about 0.0083 moles/l. of citric acid, with water being the balance of the solution. See, for example, U.S. Patent 4,534,823 (Fishter et al), issued August 13, 1985 (especially col. 2, lines 5-14), which is incorporated by reference.

With respect to chemical milling of blades made with metals, such as titanium metal, with strongly acidic solutions, it is preferred in the method of the present invention to minimize the amount of hydrogen absorption that occurs. With some metals (such as titanium), hydrogen absorption in sufficient quantities can cause undesirable metal hydrides to form. This excessive hydrogen absorption is commonly referred to as "hydrogen embrittlement." Hydrogen absorption onto the surfaces of the metal being milled can impart microstructural stresses and changes to the resulting metal part. Such microstructural changes can cause these metal parts to undesirably and prematurely crack.

Strongly acidic solutions (e.g., those containing hydrofluoric acid or its equivalent) that can be used in the method of the present invention to minimize hydrogen absorption include substantially nitrate free solutions of from about 20 to about 100 g/l. (preferably from about 35 to about 90 g/l.) of a pure hydrogen fluoride solution (or its equivalent) and at least one hydrogen inhibitor selected from the group consisting of: from about 55 to about 650 g/l. (preferably from about 60 to about 200 g/l.) sodium chlorate, from about 180 to about 650 g/l. (preferably from about 200 to about 450 g/l.) of ammonium peroxysulfate and at least about 10 g/l. (preferably from about 20 to about 150 g/l.) of hydrogen peroxide, the balance being water; and substantially nitrate free solutions of from about 5 to about 100 g/l. (preferably from about 15 to about 75 g/l.) of ammonium bifluoride and up to about 90 g/l. (preferably from about 8 to about 70 g/l.) of hydrochloric acid, the balance being water. See U.S Patent 5,248,386 (Dastolfo et al), issued September 28, 1993 (especially col. 2, lines 58-67) and U.S. Patent 5,100,500 (Dastolfo et al), issued March 31, 1992 (especially col. 3, lines 44-55), both of which are incorporated by reference. Hydrogen absorption can also be suppressed by adding copper, ruthenium, rhodium, palladium, osmium, iridium, platinum or gold to an aqueous etchant solution containing hydrofluoric acid. See U.S. Patent 5,102,499 (Jodgens et al), issued April 7, 1992 (especially col. 2, lines 28-39), which is incorporated by reference.

To minimize the amount of hydrogen absorption during chemical milling, especially when the chemical etchant does not contain hydrogen absorption suppressants, maskants that are relatively chemically resistant or inert to the etchant can be applied to the surfaces of the blade(s) (or to at least a portion of the surfaces of the blade(s)) that do not require metal removal and which can or may potentially come into contact with the chemical etchant during chemical milling. Suitable maskants include plastic films, coatings, or other materials that can be applied to the surface(s) that are made from polymers, compounds or other compositions that are chemically resistant or inert to the etchant such as ethylene glycol monomethyl ether-based compositions, rubber or synthetic rubber compositions such as neoprene-based polymers, and polytetrafluoroethylene. See, for example, U.S. Patent 5,126,005 (Blake), issued June 30, 1992 (especially col. 2, lines 8-34); U.S. Patent 5,100,500 (Dastolfo), issued March 31, 1992 (especially col. 5, lines 49-63); and U.S. Patent 4,900,389 (Chen), issued February 13, 1990 (especially col. 2, lines 46-51), all of which are incorporated by reference. The maskant can be applied in any conventional manner to the surface(s) (or portion of the surface(s)) of the blade(s) 18 to be protected from the etchant, including brushing, dipping, spraying, roller coating or flow coating. Once chemical milling has been carried out, the maskant can then be removed from the blade.

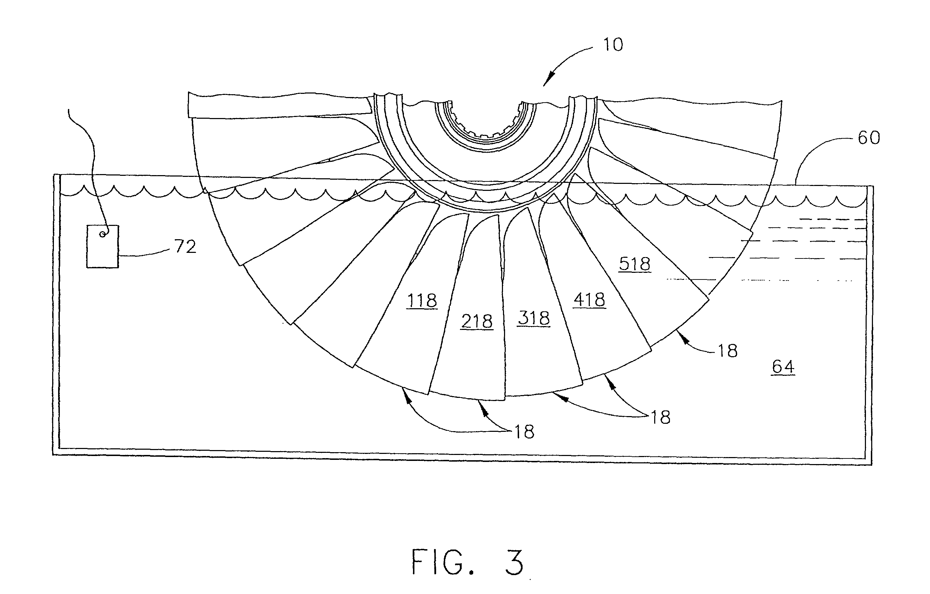

An embodiment of the method of the present invention is illustrated in FIG. 3 which shows a chemical mill tank or bath 60 that contains a chemical etchant solution 64 (for example, by volume, 3% hydrofluoric acid, 35% nitric acid, the balance deionized water). As also shown in FIG. 3, a plurality of blades (i.e., at least two blades) of blisk 10 indicated individually as 118, 218, 318, 418 and 518 have been lowered, dipped or otherwise immersed in solution 64. As noted previously, only one or some of these blades may require treatment by chemical milling to alter or change their dimensional characteristics. For example, blade 318 (hereafter referred to interchangeably as the "unprotected," "to be treated" or "treated" blade) could be the only blade that requires alterations or changes in the chord 46, the thickness 50 (or both) of the blade. The remaining blades 118, 218, 418 and 518 (hereafter referred to interchangeably as the "protected," "not to be treated" or "untreated" blades) will preferably have all of their surfaces that can or may potentially be in contact with solution 64 covered or protected with a suitable maskant that is chemically resistant or inert to the chemical etchant in solution 64. (For example, two coats AC 818 rubber composition can be applied to the surfaces to be protected, allowed to dry and then a topcoat of AC 832 rubber composition can be applied.) This permits or allows selective treatment of blade 318 without altering or changing the dimensional characteristics of untreated or protected blades 118, 218, 418 and 518.

For treatment of blades that are made of metals such as titanium and for those solutions 64 that do not contain hydrogen absorption suppressants, it is also preferred to monitor or measure the degree of hydrogen absorption that is occurring to prevent or minimize hydrogen embrittlement of the blades in contact with solution 64. For this purpose, a reference sample indicated as panel 72 can be immersed or suspended in solution 64. This reference panel 72 is preferably made of the same metal (or metal alloy) that the blade 318 undergoing chemical milling is made of. Also, prior to being immersed in solution 64, panel 72 preferably has the same or similar thickness as the thickness 50 of the airfoil portion 26 of treated blade 318.

The degree of change in the chord 46, the thickness 50 (or both) of treated blades 318 during immersion in solution 64 can be measured or monitored by various methods, such as periodic visual inspections and/or manual measurements of blade 318 itself. However, in addition to measuring and monitoring the degree of hydrogen absorption that is occurring during immersion of blade 318 in solution 64, the use of panels 72 provides another benefit by additionally measuring or monitoring the degree of change in the chord 46, the thickness 50 (or both) of treated blades 318, and thus simplifying control of the chemical milling process. By periodically measuring the thickness of panel 72, a correlation can be drawn as to changes in the chord 46, the thickness 50 (or both) of blades 318 undergoing treatment by chemical milling (as well as the degree of hydrogen absorption). For example, data can be collected from several panels 72 that have been exposed to solution 64 for different lengths or periods of time to determine the length of exposure required to achieve a specified change in the chord 46, the thickness 50 (or both) of the treated blades 318, especially when correlated to blades 18 of the same or similar thickness that have been exposed to solution 64 for the same length or periods of time. By carrying out a similar procedure for panels having different initial thicknesses, correlations can also be established for changes in treated blades 318 having these different thicknesses.

Instead of immersing all of blades 18 (treated or untreated) into solution 64, the method of the present invention can be alternatively carried out by selectively immersing solely the treated blade(s) 318 in solution 64. For example, a specially configured bath 60 could be manufactured that would permit an individual blade 318 to be selectively immersed without immersing the other blades (e.g., 118, 218, 418 and 518) that do not requirement treatment by chemical milling (or do not require treatment by chemical milling at that time). This would allow the untreated blades to be protected from the solution without the need of applying maskants.

The method of the present invention can be carried out as a single immersion step or can be carried out as a plurality of or multiple sequential immersion steps. For example, as shown in FIG. 3, the initial step could involve the treatment of blade 318, with the other blades 118, 218, 418 and 518 remaining untreated because of maskants being applied to the surfaces (or portions of surfaces) of the blades to be protected from treatment by the etchant. After the initial treatment of blade 318, the maskant could be removed in a subsequent step from the protected surfaces of one or more of the remaining untreated blades 118, 218, 418 and 518. For example, the maskant applied to blade 118 could be removed, with all of the blades being immersed again in solution 64 so that blades 318 and 118 are treated with the etchant. This subsequent treatment step can be repeated as many times as desired by removing the maskant from the surfaces of one or more of the remaining untreated blades 218, 418 and 518, and then immersing all of the blades again in solution 64 to further treat the blades not protected by the maskant.

After treatment of the blades of blisk 10 with solution 64, any residue thereof on the blades can be rinsed off (e.g., with water), neutralized or otherwise removed by methods known to those skilled in the art of chemical milling. Any maskant that is applied to the surfaces of the untreated or protected blades can also be removed, such as by stripping from the surfaces (with or without treatment with solvents for the maskant) or other methods known to those skilled in the art of chemical milling, so that the blisk can be ready for use.

While specific embodiments of the present invention have been described, it will be apparent to those skilled in the art that various modifications thereto can be made without departing from the spirit and scope of the present invention as defined in the appended claims.

## Claims

1. A method for chemical milling of a gas turbine engine blisk (10) having a hub (14) and a plurality of blades (18) made of metal spaced circumferentially around the hub (14) and extending radially outwardly therefrom, each of the blades (18) of the blisk (10) having a leading edge (30), a trailing edge (34), a chord (46) defined by a line extending from the leading (30) to the trailing edge (34), a convex curved surface (38), a concave curved surface (42) and a thickness (50) defined between the convex (38) and the concave (42) surfaces, the method comprising the step of treating at least one blade (18) of the blisk (10) with a chemical etchant of the metal that the at least one blade (18) is made of for a period of time sufficient to change the at least one of the chord (46) and thickness (50).

2. A method for selective chemical milling of a rotationally imbalanced gas turbine engine blisk (10) having a hub (14) and a plurality of blades (18) made of metal spaced circumferentially around the hub (14) and extending radially outwardly therefrom, wherein each of the blades (18) of the blisk (10) having a leading edge (30), a trailing edge (34), a chord (46) defined by a line extending from the leading (30) to the trailing (34) edge, a convex curved surface (38), a concave curved surface (42) and a thickness (50) defined between the convex (38) and the concave (42) surfaces, the method comprising the step of selectively treating the at least one blade (18) of the blisk (10) with a chemical etchant of the metal that the at least one blade (18) is made of for a period of time sufficient to change the at least one of the chord (46) and thickness (50) so that the blisk (10) is rotationally balanced.

3. The method of claim 1 or claim 2 wherein the chemical etchant is an aqueous etchant solution (64) comprising at least one strong acid.

4. The method of claim 3 wherein the strong acid is selected from the group consisting of hydrofluoric acid, nitric acid, hydrochloric acid, sulfuric acid, and mixtures thereof.

5. The method of any preceding claim wherein the treating step comprises immersing the at least one blade (18) to be treated in the solution (64).

6. The method of claim 5 wherein the treating step comprises immersing at least two blades (18) of the blisk (10) in the solution (64), the at least two blades (18) of the blisk (10) including the at least one blade (318) to be treated with the solution (64) and at least one blade (118, 218, 418, 518) not to be treated with the solution (64), and which comprises the further step of applying to the surfaces (38, 42) that are potentially in contact with the solution (64) of the at least one blade (118, 218, 418, 518) that is not to be treated with the solution (64) a maskant that is chemically resistant to the solution (64), the maskant being applied to the surfaces (38, 42) prior to immersion of the at least two blades (18) of the blisk (10) in the solution (64).

7. The method of claim 6 wherein the maskant is a material selected from the group consisting of plastic films and coatings.

8. The method of claim 6 or claim 7 which further comprises the subsequent steps of removing the maskant from the surfaces (38, 42) of at least one untreated blade (118, 218, 418, 518) and after removal of the maskant, immersing the at least two blades (18) of the blisk (10) in the solution (64) for a period time sufficient to change at least one of the chord (46) and thickness (50) of the at least one blade (118, 218, 418, 518) from which the maskant has been removed.

9. The method of claim 5 wherein the treating step comprises selectively immersing in the solution (64) solely the at least one blade to be treated (318).

10. The method of claim 5 wherein a reference panel (72) made of the same metal as the at least one blade to be treated (318) is immersed in the solution (64) to monitor at least one of the degree of change in the at least one of the chord (46) and thickness (50) and the degree of hydrogen absorption by the metal.

11. The method of claim 10 wherein the metal is selected from the group consisting of titanium, steel, nickel, tungsten and alloys thereof.
